# EUROPÄISCHE PATENTSCHRIFT

(11) **EP 1 994 241 B1**
(45) Veröffentlichungstag und Bekanntmachung des Hinweises auf die Patenterteilung: **02.06.2010**
(21) Anmeldenummer: 08734746.4
(22) Anmeldetag: 25.03.2008
(51) Int. Cl.: E04F 15/02

(54) **PANEEL, INSBESONDERE BODENPANEEL**
PANEL, PARTICULARLY FLOOR PANEL
PANNEAU, NOTAMMENT PANNEAU DE SOL

(30) Priorität: 26.03.2007 DE 102007015048
(43) Veröffentlichungstag der Anmeldung: 26.11.2008
(60) Teilanmeldung: 09013836.3
(73) Patentinhaber: Kronotec AG, 6006 Luzern (CH)
(72) Erfinder:
(74) Vertreter: Rehmann, Thorsten
(86) Internationale Anmeldenummer: PCT/EP2008/002336
(87) Internationale Veröffentlichungsnummer: WO 2008/116623

(56) Entgegenhaltungen:
- EP-A- 1 279 778
- EP-A- 1 350 904
- EP-A- 1 650 375
- WO-A-2007/020088

## Beschreibung

Die Erfindung betrifft ein Paneel, insbesondere Bodenpaneel, mit einem Kern aus Holzwerkstoff oder Holzwerkstoff-Kunststoff-Gemisch, einer Oberseite und einer Unterseite, das an mindestens zwei sich gegenüberliegenden Seitenkanten eine solche, zueinander korrespondierende Profilierung aufweist, dass zwei identisch ausgebildete Paneele durch eine im Wesentlichen vertikale Fügebewegung in horizontaler und vertikaler Richtung miteinander verbindbar und verriegelbar sind, wobei die Verriegelung in vertikaler Richtung durch mindestens ein in horizontaler Richtung bewegbares, einstückig aus dem Kern herausgebildetes Federelement bewirkbar ist, das bei der Fügebewegung hinter einer sich im Wesentlichen in horizontaler Richtung erstreckenden Verriegelungskante einschnappt.

Ein solches Paneel ist beispielsweise aus der EP 1 350 904 oder der EP 1 279 778 A1 bekannt. Diese bei diesem Paneel realisierte Art der Verriegelung ist bevorzugt an der Querseite von Bodenpaneelen vorgesehen. Sie kann aber auch an der Längsseite bzw. sowohl an der Längsseite als auch an der Querseite vorgesehen sein.

Aus der EP 1 650 375 A1 ist ein Bodenpaneel bekannt, bei dem ein separates Federelement vorgesehen ist, das bei einer vertikalen Fügebewegung hinter einer sich im wesentlichen in horizontaler Richtung erstreckenden Verjüngungskante einschnappt. Das Federelement besteht aus Kunststoff und ist in eine horizontal verlaufende Nut an einer der Seitenkanten eingesetzt und an seiner Oberseite abgeschrägt. Ähnlich einem Türschnapper wird durch die Schräge das Federelement von dem neu anzusetzenden Paneel nach innen in die Nut hineingedrückt, wenn dieses mit seiner Unterseite auf die Abschrägung auftritt und weiter abgesenkt wird. Wenn das neu anzulegende Paneel vollständig auf den Unterboden abgesenkt ist, schnappt das Federelement in eine horizontal in der gegenüberliegenden Seitenkante eingebrachte Nut ein und verriegelt die beiden Paneele in vertikaler Richtung. Für die Fertigung dieses Federelementes sind spezielle Spritzgußwerkzeuge notwendig, so dass die Herstellung relativ teuer ist. Des Weiteren muss ein hochwertiger Kunststoff verwendet werden, um ausreichende Festigkeitswerte zur Verfügung zu stellen, was das Federelement weiter verteuert. Werden Kunststoffe mit zu geringen Festigkeitswerten verwendet, führt dies zu relativ großen Abmaßen der Federelemente, da nur dadurch gewährleistet ist, dass entsprechende Kräfte erzeugt bzw. übertragen werden können.

Dadurch, dass das Verriegelungselement als separates Bauteil ausgeführt ist, ergeben sich zusätzliche Aufwendungen. Die Herstellung des Verriegelungselementes erfolgt technologisch bedingt räumlich getrennt von den Paneelen, so dass eine Einbindung in den kontinuierlichen Herstellungsprozeß, insbesondere für Fußbodenpaneele, eher nicht möglich ist. Durch die unterschiedlichen Materialien, Holzwerkstoff auf der einen Seite und Kunststoff auf der anderen Seite, ist die Angleichung von Fertigungstoleranzen aus zwei separaten Herstellungsprozessen aufwändig und kostenintensiv. Da die Verriegelung in vertikaler Richtung bei fehlendem Verriege-lungselement unwirksam wäre, muss dieses zudem gegen Herausfallen aus der in die Seitenkante eingebrachten Nut im weiteren Herstellungsprozess und beim Transport gesichert werden. Auch diese Sicherung ist aufwändig. Alternativ dazu könnte das Verriegelungselement dem Verbraucher separat zur Verfügung gestellt werden.

Immer häufiger werden die in Rede stehenden Bodenpaneele von Heimwerkern verlegt, so dass grundsätzlich die Möglichkeit aufgrund fehlender Erfahrung besteht, dass die benötigte Anzahl der Verriegelungselemente zunächst falsch eingeschätzt wird und diese nicht in ausreichender Menge beschafft werden, um einen Raum vollständig auslegen zu können. Außerdem ist nicht auszuschließen, dass der Heimwerker beim Einsetzen des Federelementes Fehler begeht, was dazu führt, dass die Verriegelung nicht exakt möglich ist und sich der Verbund im Laufe der Zeit löst, was dann fälschlich vom Verbraucher der vom Hersteller gelieferten Qualität zugeschrieben wird.

Aus der DE 102 24 540 A1 sind Paneele bekannt, die an gegenüberliegenden Seitenkanten so profiliert sind, dass sich hakenförmige Verbindungselemente zur Verriegelung in horizontaler Richtung ausbilden. Zur Verriegelung in vertikaler Richtung sind an den Verbindungselementen voneinander horizontal und vertikal beabstandete Formschlusselemente und hierzu korrespondierende Hinterschnitte mit jeweils einer horizontal ausgerichteten Verriegelungsfläche vorgesehen. Die Querausdehnung derartiger horizontal ausgerichteter Verriegelungsflächen beträgt etwa 0,05 bis 1,0 mm. Damit das Zusammenfügen zweier Paneele überhaupt möglich bleibt, muss die Dimensionierung so klein sein. Dadurch stellt sich aber zwangsläufig ein, dass nur geringe, vertikal gerichtete Kräfte aufgenommen werden können, so dass mit äußerst geringen Toleranzen gefertigt werden muss, um sicherzustellen, dass nicht bereits bei leichten Bodenunebenheiten und/oder weichen Untergründen die Verbindung bei normaler Belastung aufspringt.

Von dieser Problemstellung ausgehend soll das eingangs beschriebene Paneel verbessert werden.

Zur Problemlösung zeichnet sich ein gattungsgemäßes Bodenpaneel dadurch aus, dass das mindestens eine Federelement in Richtung der Oberseite und in Richtung der ihm gegenüberliegenden ersten Seitenkante gegenüber dem Kern frei gelegt und in Langsrichtung der zweiten Seitenkante an mindestens einem, an mindestens einem seiner beiden Enden mit dem Kern verbunden ist.

Durch die Größe der wirksamen Verbindung des Federelementes mit dem Kern kann die Federelastizität eingestellt werden.

Durch diese Ausgestaltung wird die Produktion drastisch vereinfacht. Das Abgleichen der Toleranzen unterschiedlicher Bauteile entfällt. Fertigungszeiten und -kosten werden reduziert, weil es nicht notwendig ist, unterschiedliche Bauteile zusammenzuführen und zusammenzuhalten. Beim Endverbraucher ist außerdem sichergestellt, dass keine Bauteile fehlen und kann nicht weiter gearbeitet werden kann.

Die Freilegung des Federelementes erfolgt vorzugsweise mittels eines horizontalen und eines vertikalen Schlitzes. Durch die Breite der Schlitze wird nicht nur die Stärke der Anbindung des Federelementes an das Kernmaterial bestimmt, sondern durch die Wahl der Breite des vertikalen Schlitzes kann auch ein Anschlag in horizontaler Richtung für das Federelement geschaffen werden, so dass dieses gegen Überdehnung sicher geschützt wird.

Wenn über die Länge der Seitenkante eine Mehrzahl von zueinander beabstandeten Federelementen vorgesehen ist, wird die Stabilität der Verbindung erhöht, weil der freie Federweg in Längsrichtung des Federelementes begrenzt wird. Der Abstand zwischen den einzelnen Federelementen kann mehr oder weniger groß gewählt werden. Je geringer der Abstand ist, umso größer ist natürlich die wirksame Fläche, mit der verriegelt wird, so dass die übertragbaren Kräfte in vertikaler Richtung entsprechend hoch sind.

Die horizontale Verriegelung erfolgt bevorzugt mittels zueinander korrespondierender Hakenelemente, wobei das Hakenelement an der die Verriegelungskante aufweisenden Seitenkante durch einen in Richtung der Oberseite hervorspringenden Absatz und das Hakenelement an der das Federelement aufweisenden Seitenkante durch einen in Richtung der Unterseite gerichteten Absatz ausgebildet wird.

Wenn die äußere Kante des Federelementes in einem Winkel zur Oberseite geneigt verläuft, wird die Fügebewegung erleichtert, weil das Federelement mit zunehmender Bewegung tiefer in Richtung des Paneelkerns einfedert.

Die im Wesentlichen horizontal verlaufende Verriegelungskante ist vorzugsweise die Seitenwandung einer in die Seitenkante eingebrachten Nut.

Die im Wesentlichen horizontal verlaufende Verriegelungskante kann aber auch durch einen nach außen ragenden Vorsprung an dem hervorspringenden Absatz gebildet werden. Für diesen Fall ist es dann vorteilhaft, wenn das Federelement an der Unterseite des Paneels endet.

Um eine möglichst sichere Verriegelung in vertikaler Richtung zu erzielen, kann der nach unten ragende Absatz eine zumindest teilweise ebene Kopffläche aufweisen, die in derselben horizontalen Ebene endet wie eine an der gegenüberliegenden Seitenkante ausgebildete Auflagefläche, so dass sich zwei miteinander verbundene Paneele aufeinander abstützen können.

Wenn die Hakenelemente so ausgebildet sind, dass sich in der Verbindungsstelle zweier miteinander verbundener Paneele eine Vorspannung einstellt, werden die Seitenkanten der Paneele im Bereich der Oberseite mit ihren vertikalen Flächen aneinandergepreßt, wodurch eine dichte Verbindung an der Plattenoberseite erzielt und Spaltbildung vermieden werden kann.

Mit Hilfe einer Zeichnung sollen nachfolgende Ausführungsbeispiele der Erfindung beschrieben werden.

Es zeigt:

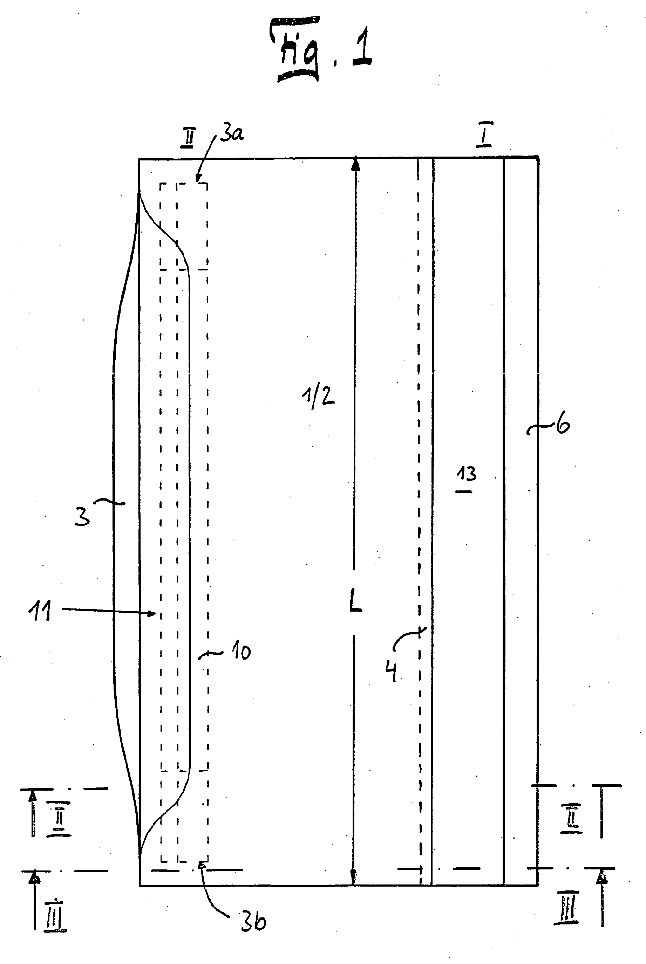

- Figur 1: die Draufsicht auf ein erstes Paneel;
- Figur 2: die Darstellung zweier miteinander verbundener Paneele im Teilschnitt analog zu der Schnittlinie II-II nach Figur 1;
- Figur 3: die Darstellung entsprechend Figur 2 analog zu der Schnittlinie III-III nach Figur 1;
- Figur 4: eine erste Variante des Paneels nach Figuren 2 und 3;
- Figur 5: eine zweite Variante des Paneels nach Figuren 2 und 3;
- Figur 6: die Seitenansicht zweier miteinander verbundener Paneele nach einem zweiten Ausführungsbeispiel;
- Figur 7: den Schnitt der miteinander verbundenen Paneele aus Figur 6;
- Figur 8: eine weitere Ausführungsform der Paneele;
- Figur 9: eine vierte Ausführungsform der Paneele;

Die Paneele 1, 2 sind identisch ausgebildet. Sie bestehen aus einem Kern 17 aus Holzwerkstoff oder einem Holzwerkstoff-Kunststoff-Gemisch. An ihren sich gegenüber liegenden Seitenkanten I, II, sind die Paneele 1, 2 profiliert, wobei die Seitenkante I von der Oberseite 18 und die Seitenkante II von der Unterseite 19 fräsend bearbeitet wurde. An der Seitenkante II ist das Federelement 3 ausgebildet, das durch Freifräsen des Kerns 17 erzeugt wurde, indem ein horizontaler Schlitz 11 und ein im Wesentlichen vertikal verlaufender Schlitz 10 eingefräst wurden. Die Seitenkanten I, II haben die Länge L. In Längsrichtung der Seitenkante II ist das Federelement 3 an seinen Enden 3a, 3b mit dem Kernmaterial verbunden. Die Freilegung des Federelementes 3 vom Kern 17 erfolgt ausschließlich durch die Schlitze 10, 11. Die äußere Kante 3c des Federelementes 3 ist gegenüber der Oberseite 18 des Paneels 2 im Winkel α geneigt. Die vertikalen Flächen der Seitenkanten I, II sind so bearbeitet, dass sich im Bereich der Oberseite 18 Anlageflächen 15, 16 ausbilden.

An der dem Federelement 3 gegenüberliegenden Seitenkante I ist das Paneel 1 mit einer sich im Wesentlichen in horizontaler Richtung H erstreckenden Nut 9 versehen, deren obere Seitenwandung eine im Wesentlichen horizontal verlaufende Verriegelungskante 4 ausbildet. Wie in den Figuren dargestellt, verläuft der Nutgrund der Nut 9 parallel zur äußeren Kante 3c des Federelementes 3, was die Fertigung der Nut 9 erleichtert, er könnte aber auch strikt in vertikaler Richtung oder mit einem vom Winkel α abweichenden Winkel ausgeführt sein.

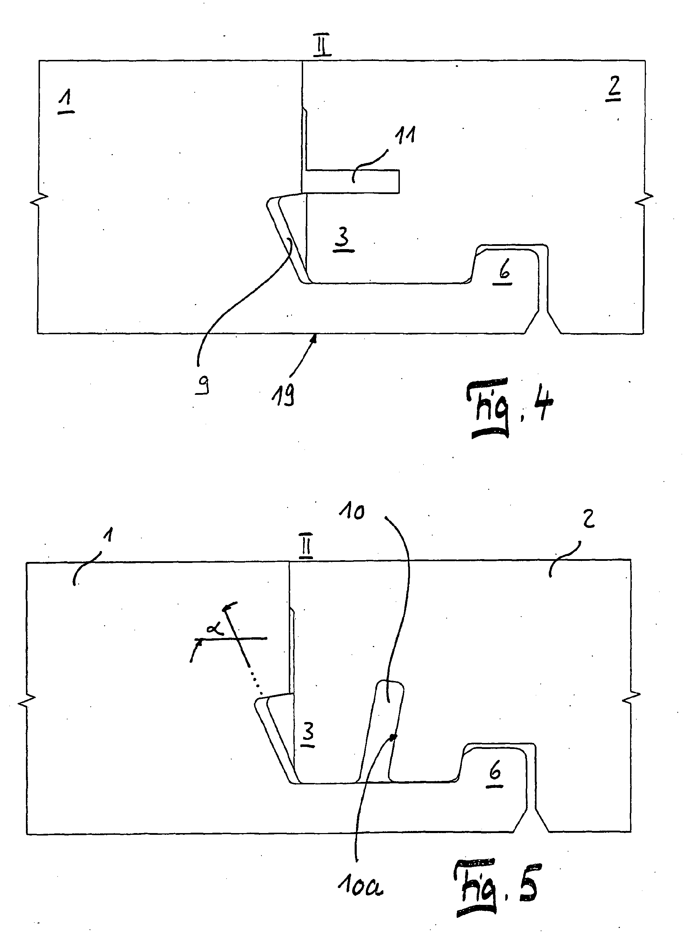

Die Verriegelung der beiden Paneele 1, 2 in horizontaler Richtung erfolgt über die durch eine Stufenprofilierung fräsend erzeugten Hakenelemente 20, 21 und in vertikaler Richtung über das Federelement 3 in Verbindung mit der Verriegelungskante 4 der Nut 9. Am sich nach unten erstreckenden Absatz 5 des Hakenelementes 21 ist eine zumindest teilweise plane Kopffläche 12 ausgebildet, die zusammenwirkt mit einer am Hakenelement 20 an der gegenüberliegenden Seitenkante I ausgebildeten Auflagefläche 13, die hinter dem Vorsprung 6 zurückragt. Die Kopffläche 12 und die Auflagefläche 13 enden in derselben horizontalen Ebene E, so dass sich die miteinander verbundenen Paneele 1, 2 aufeinander abstützen. Die Profilierung der Hakenelemente 20, 21 ist so gewählt, dass in der Verbindungsstelle eine Vorspannung erzeugt wird und die vertikalen Anlageflächen 15, 16 der Paneele 1, 2 aufeinander zugepreßt werden, so dass an der Oberseite 18 zweier miteinander verbundener Paneele 1, 2 kein sichtbarer Spalt entsteht. Um das Fügen der Paneele 1, 2 zu erleichtern, sind der nach oben ragende Absatz 6 des Hakenelementes 20 und der nach unten ragende Absatz 5 des Hakenelementes 21 an ihren Kanten gefast bzw. verrundet. Um die Fertigung zur Ausbildung des Federelementes 3 zu vereinfachen, können entweder der horizontal verlaufende Schlitz 11 (Figur 4) oder der im Wesentlichen vertikal verlaufende Schlitz 10 (Figur 5) durchgängig sein, also über die volle Länge L der Seitenkante II reichen.

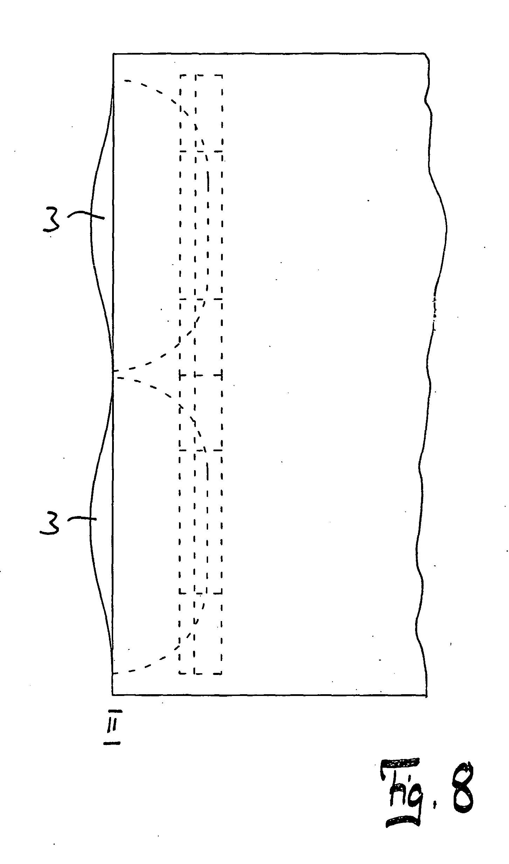

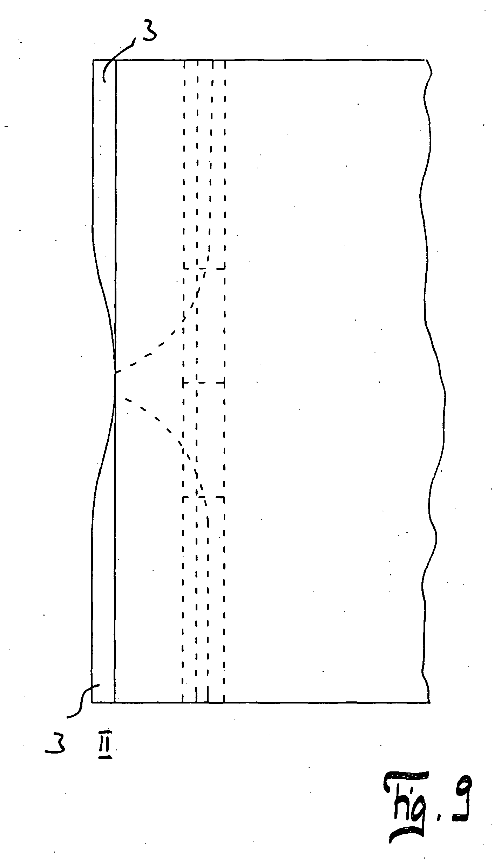

Das Paneel 2 wird mit dem bereits auf dem Unterboden liegenden Paneel 1 verbunden, in dem das Paneel 2 an der Seitenkante I des Paneels 1 angelegt und durch eine im Wesentlichen vertikale Fügeverbindung in Richtung des Unterbodens abgesenkt wird. Wenn das Federelement 3 mit seiner unteren Kante 3d an der Oberseite 18 des Paneels 1 anstößt, wird es bei der weiteren Fügebewegung infolge seiner im Winkel α verlaufenden äußeren Seitenkante 3c bei Berührung mit der Anlagefläche 15 in Richtung des Kerns 17 gedrückt, so dass es in horizontaler Richtung H ausweicht. Das Paneel 2 wird weiter nach unten abgesenkt. Gelangt das Federelement 3 in eine Lage gegenüber der Nut 9 wird es infolge der dem Material inhärenten Rückstellkräfte ausgefedert und schnappt dann in die Nut 9 ein, wo es mit seiner im Wesentlichen horizontal verlaufenden Oberseite 3e an der Verriegelungskante 4 anliegt. Gleichzeitig gelangen die Hakenelemente 20, 21 in Eingriff, bis die Kopffläche 12 sich auf der Auflagefläche 13 abstützt. Die Paneele 1, 2 sind dann miteinander verbunden und verriegelt. Die innere Wandung 10a des Schlitzes 10 dient als Begrenzung des Einfederweges für das Federelement 3, um zu verhindern, dass durch eine zu weite Eintauchbewegung die Verbindung des Federelementes 3 an seinen Enden 3a, 3b mit dem Kern 17 ausreißt. Die Fläche, also die Höhe und die Breite, mit der die Enden 3a, 3b mit dem Kern 17 verbunden sind, bestimmen die Federrate des Federelementes 3. Wie Figuren 8 und 9 zeigen, können mehrere Federelemente 3 über die Länge L der Seitenkante II ausgebildet werden. In den Figuren 8 und 9 sind zwei ausgebildete Federelemente 3 gezeigt. Es ist durchaus auch denkbar, die Federelemente 3 kürzer auszugestalten und fünf, sechs oder gar sieben oder mehr Federelemente 3 vorzusehen.

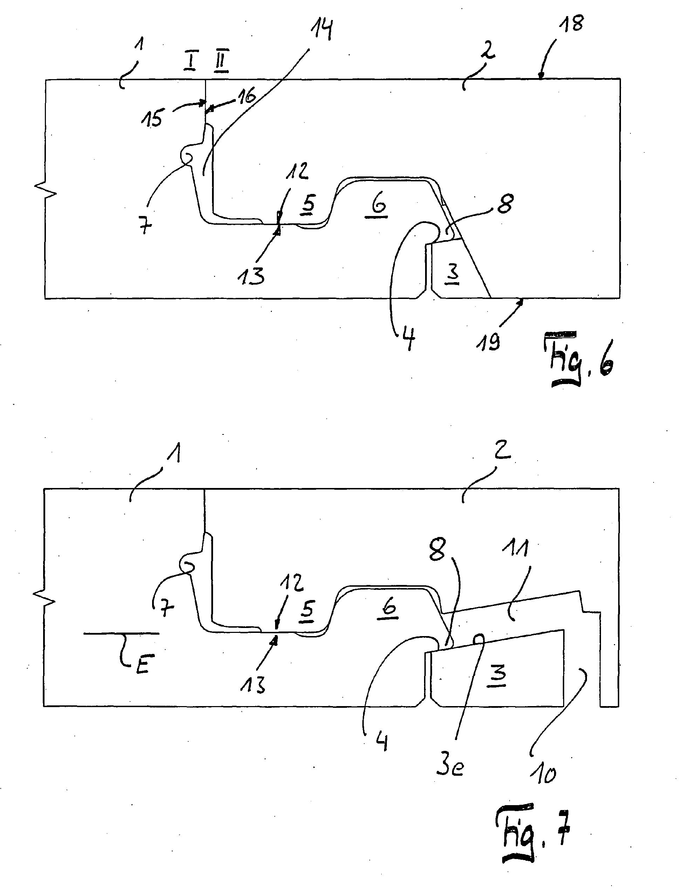

Bei dem in Figuren 6 und 7 gezeigten Ausführungsbeispiel ist das Federelement 3 an der Unterseite 19 der Paneele 1, 2 ausgebildet. Die Verriegelungskante 4 an der Seitenkante I wird durch einen Vorsprung 8 am Absatz 6 gebildet. Auch hier erfolgt die Freilegung des Federelementes 3 durch den im Wesentlichen in horizontaler Richtung H verlaufenden Schlitz 11 und den in vertikaler Richtung V verlaufenden Schlitz 10. Auch hier kann einer der Schlitze 10, 11 zur Vereinfachung des Fertigungsverfahrens über die volle Länge L der Seitenkante II reichen. Die vertikalen Flächen 15, 16 sind an den Seitenkante I, II bei dieser Ausführungsform so bearbeitet, dass sich eine Staubtasche 14 ausbildet, wobei an der Seitenkante I eine in den Kern 17 hineinragende Hinterschneidung 7 vorgesehen ist.

Wenn der vertikale Schlitz 10 schmal genug ausgebildet ist, ist es möglich, das Federelement 3 nur an einem seiner Enden 3a oder 3b mit dem Kern verbunden zu halten. Dies ist in der Draufsicht nach Figur 9 angedeutet. Eine solche Ausgestaltung hat den Vorteil, dass sich das Federelement 3 auch in Richtung der Länge L der Seitenkante II ausdehnen kann. Das dann freie Ende 3a oder 3b stützt sich dann an der inneren Wandung 10a des Schlitzes 10 ab.

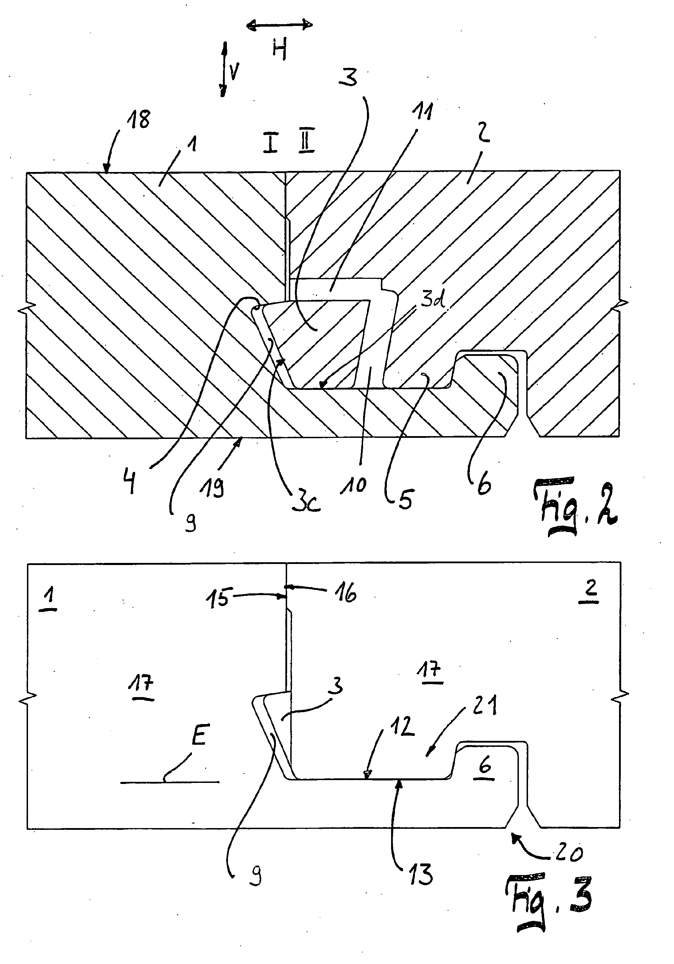

Das Herausarbeiten des Federelementes 3 erfolgt bei dem aus Figuren 2 und 3 ersichtlichen Paneel 1, 2 mittels quer zur Verarbeitungsrichtung verschiebbarer Werkzeuge. Als Werkzeuge können Fräs-, Laser- oder Wasserstrahlwerkzeuge oder auch stehende Klingen oder Räumnadeln verwendet werden. Bei den Ausführungsbeispielen nach Figuren 4 und 5 ist jeweils nur ein verschiebbares Werkzeug nötig, so dass die jeweils andere Freistellung mittels eines konventionellen starren Werkzeugs ausgeführt werden kann. Dabei verringert sich der nicht freigestellte Bereich, der das Federelement 3 mit dem Kern 17 einstückig verbindet. Dadurch lassen sich auch unterschiedich starke Verriegelungskräfte einstellen. Die Verriegelung ist bei allen Ausführungsbeispielen lösbar, indem die Paneele 1, 2 relativ zueinander entlang der Seitenkanten I, II verschoben werden oder indem ein nicht gezeigter Entriegelungsstift seitlich in die Verbindungsstelle eingeführt wird.

Die Paneele 1, 2 sind an ihrer Oberseite 18 üblicherweise mit einem Dekor versehen, das unmittelbar auf die Oberseite 18 aufgedruckt sein kann. Das Dekor wird üblicherweise durch eine Verschleißschutzschicht abgedeckt, in die eine zu dem Dekor korrespondierende Strukturierung eingeprägt sein kann.

Diese vorstehend beschrieben Art der Verriegelung wird bevorzugt an der Querseite von Paneelen 1, 2 vorgesehen, die an Ihrer Längsseite durch Einwinkeln und Herabschwenken auf den Unterboden miteinander verbunden werden können, wie dies in der DE 102 24 540 A1 beschrieben ist. Denkbar ist aber auch, diese Profilierung sowohl an den Längsseiten als auch an den Querseiten auszubilden, so dass die Paneele durch eine rein vertikale Fügebewegung an allen Seitenkanten miteinander verbunden und verriegelt werden können.

### Bezugszeichenliste:

- 1: Paneel
- 2: Paneel
- 3: Federelement
- 3a: Ende
- 3b: Ende
- 3c: äußere Kante
- 3d: untere Kante
- 3e: Oberseite
- 4: Verriegelungskante
- 5: Absatz
- 6: Absatz
- 8: Vorsprung
- 9: Nut
- 10: Schlitz
- 10a: innere Wandung
- 11: Schlitz
- 12: Kopffläche
- 13: Auflagefläche
- 14: Staubtasche
- 15: vertikale Fläche
- 16: vertikale Fläche
- 17: Kern
- 18: Oberseite
- 19: Unterseite
- 20: Hakenelement
- 21: Hakenelemente
- E: Ebene
- H: horizontale Richtung
- L: Länge
- V: vertikale Richtung
- I: Seitenkante
- II: Seitenkante
- α: Winkel

## Patentansprüche

1. Paneel, insbesondere Bodenpaneel (1, 2), mit einem Kern aus Holzwerkstoff oder Holzwerkstoff-Kunststoff-Gemisch (17), einer Oberseite (18) und einer Unterseite (19), das an mindestens zwei sich gegenüberliegenden ersten und zweiten Seitenkanten (I, II) eine solche zueinander korrespondierende Profilierung aufweist, dass zwei identisch ausgebildete Paneele (1, 2) durch eine im Wesentlichen vertikale Fügebewegung in horizontaler (H) und vertikaler (V) Richtung miteinander verbindbar und verriegelbar sind, wobei die Verriegelung in vertikaler Richtung (V) durch zumindest ein in horizontaler Richtung (H) im Bezug auf dem Kernbewegbares, einstückig aus dem Kern (17) herausgebildetes Federelement (3) bewirkbar ist, das bei der Fügebewegung hinter eine sich im Wesentlichen in horizontaler Richtung (H) erstreckende Verriegelungskante (4) einschnappt, **dadurch gekennzeichnet, dass** das mindestens eine Federelement (3) in Richtung der Oberseite (18) und in Richtung der ihm gegenüberliegenden ersten Seitenkante (I) gegenüber dem Kern (17) frei gelegt und in Längsrichtung der zweiten Seitenkante (II) an mindestens einem seiner beiden Enden (3a, 3b) mit dem Kern (17) verbunden ist.

2. Paneel nach Anspruch 1, **dadurch gekennzeichnet, dass** das Federelement (3) an seinen beiden Enden (3a, 3b) mit dem Kern (17) verbunden ist.

3. Paneel nach Anspruch 1 oder 2, **dadurch gekennzeichnet, dass** das Federelement (3) mittels eines im Wesentlichen horizontalen Schlitzes (11) und eines im Wesentlichen vertikalen Schlitzes (10) gegenüber dem Kern (17) freigelegt ist.

4. Paneel nach einem oder mehreren der vorstehenden Ansprüche, **dadurch gekennzeichnet, dass** über die Länge (L) der zweiten Seitenkante (II) eine Mehrzahl von zueinander beabstandeten Federelementen (3) vorgesehen ist.

5. Paneel nach einem oder mehreren der vorstehenden Ansprüche, **dadurch gekennzeichnet, dass** die horizontale Verriegelung mittels zueinander korrespondierender Hakenelemente (20, 21) erfolgt.

6. Paneel nach Anspruch 5, **dadurch gekennzeichnet, dass** das Hakenelement (20) an der die Verriegelungskante (4) aufweisenden ersten Seitenkante (I) durch einen in Richtung der Oberseite (18) hervorspringenden Absatz (6) und das Hakenelement (21) an der das Federelement (3) aufweisenden zweiten Seitenkante (II) durch einen in Richtung der Unterseite (19) gerichteten Absatz (5) ausgebildet wird.

7. Paneel nach einem oder mehreren der vorstehenden Ansprüche, **dadurch gekennzeichnet, dass** die äußere Kante (3c) des Federelementes (3) in einem Winkel (a) zur Oberseite (18) geneigt verläuft.

8. Paneel nach einem oder mehreren der vorstehenden Ansprüche, **dadurch gekennzeichnet, dass** die im Wesentlichen horizontal verlaufende Verriegelungskante (4) die Seitenwandung einer in die erste Seitenkante (I) eingebrachten Nut (9) ist.

9. Paneel nach Anspruch 6, **dadurch gekennzeichnet, dass** die im Wesentlichen horizontal verlaufende Verriegelungskante (4) an dem hervorspringenden Absatz (6) ausgebildet ist.

10. Paneel nach Anspruch 9, **dadurch gekennzeichnet, dass** das Federelement (3) an der Unterseite (19) endet.

11. Paneel nach einem oder mehreren der Ansprüche 6 bis 10, **dadurch gekennzeichnet, dass** der nach unten ragenden Absatz (5) eine zumindest teilweise ebene Kopffläche (12) aufweist, die in derselben horizontalen Ebene (E) wie eine an der gegenüberliegenden ersten Seitenkante (I) ausgebildete Auflagefläche (13) endet, so dass sich zwei miteinander verbundene Paneele (1, 2) aufeinander abstützen.

12. Paneel nach einem oder mehreren der vorstehenden Ansprüche, **dadurch gekennzeichnet, dass** in der Verbindungsstelle zweier miteinander verbundener Paneele (1,2) mittels der Hakenelemente (20, 21) eine Vorspannung derart erzeugt wird, dass die Seitenkanten (I, II) der Paneele (1, 2) im Bereich der Oberseite (18) mit ihren vertikalen Flächen (15, 16) aneinander gepresst werden.

## Claims

1. Panel, in particular a floor panel (1, 2), with a core made of wood-based material or a mixture of wood-based material and plastics material (17), an upper side (18) and a lower side (19), which, at at least two opposing first and second side edges (I, II) has a mutually corresponding profiling such that two identically formed panels (1, 2) can be connected to one another in the horizontal (H) and vertical (V) direction by a substantially vertical joining movement and can be locked, it being possible to effect the locking in the vertical direction (V) by means of at least one spring element (3) which can be moved in the horizontal direction (H) in relation to the core and is formed in one piece out of the core (17) and which, during the joining movement, snaps in behind a locking edge (4) extending substantially in the horizontal direction (H), **characterised in that** the at least one spring element (3) is exposed relative to the core (17) in the direction of the upper side (18) and in the direction of the first side edge (I) opposing it and is connected, in the longitudinal direction of the second side edge (II) at at least one of its two ends (3a, 3b), to the core (17).

2. Panel according to claim 1, **characterised in that** the spring element (3) is connected at its two ends (3a, 3b) to the core (17).

3. Panel according to claim 1 or 2, **characterised in that** the spring element (3) is exposed relative to the core (17) by means of a substantially horizontal slot (11) and a substantially vertical slot (10).

4. Panel according to any one or more of the preceding claims, **characterised in that** a plurality of spring elements (3), which are spaced apart from one another, is provided over the length (L) of the second side edge (II).

5. Panel according to any one or more of the preceding claims, **characterised in that** the horizontal locking takes place by means of mutually corresponding hook elements (20, 21).

6. Panel according to claim 5, **characterised in that** the hook element (20) at the first side edge (I) having the locking edge (4) is formed by a shoulder (6) projecting in the direction of the upper side (18) and the hook element (21) on the second side edge (II) having the spring element (3) is formed by a shoulder (5) directed in the direction of the lower side (19).

7. Panel according to any one or more of the preceding claims, **characterised in that** the outer edge (3c) of the spring element (3) runs inclined at an angle (a) to the upper side (18).

8. Panel according to any one or more of the preceding claims, **characterised in that** the substantially horizontally extending locking edge (4) is the side wall of a groove (9) introduced into the first side edge (I).

9. Panel according to claim 6, **characterised in that** the substantially horizontally extending locking edge (4) is formed on the projecting shoulder (6).

10. Panel according to claim 9, **characterised in that** the spring element (3) ends at the lower side (19).

11. Panel according to any one or more of claims 6 to 10, **characterised in that** the downwardly projecting shoulder (5) has an at least partially level head face (12), which ends in the same horizontal plane (E) as a support face (13) formed on the opposing first side edge (I), so the two mutually connected panels (1, 2) are supported on one another.

12. Panel according to any one or more of the preceding claims, **characterised in that** a prestressing is produced in the connecting point of two mutually connected panels (1, 2) by means of the hook elements (20, 21), in such a way that the side edges (I, II) of the panels (1, 2) are pressed against one another in the region of the upper side (18) by their vertical faces (15, 16).

## Revendications

1. Panneau, notamment panneau de plancher (1, 2), comprenant une âme en matériau dérivé du bois ou en mélange de matière synthétique et de matériau dérivé du bois (17), une face supérieure (18) et une face inférieure (19), lequel présente sur au moins deux premier et deuxième bords latéraux (I, II) opposés, un tel profilage se correspondant mutuellement que deux panneaux (1, 2) formés identiquement peuvent être reliés et verrouillés ensemble dans les directions horizontale (H) et verticale (V) par un mouvement d'assemblage sensiblement vertical, le verrouillage dans la direction verticale (V) pouvant être provoqué par au moins un élément languette (3) formé d'un seul tenant à partir de l'âme (17), déplaçable dans la direction horizontale (H) par rapport à l'âme, et qui lors du mouvement d'assemblage s'encliquette derrière un bord de verrouillage (4) s'étendant sensiblement dans la direction horizontale (H), **caractérisé en ce que** l'au moins un élément languette (3) est détaché par rapport à l'âme (17) dans la direction de la face supérieure (18) et dans la direction du premier bord latéral (I) faisant face à l'élément languette et est relié à l'âme (17) dans la direction longitudinale du deuxième bord latéral (II) à au moins l'une de ses deux extrémités (3a, 3b).

2. Panneau selon la revendication 1, **caractérisé en ce que** l'élément languette (3) est relié à ses deux extrémités (3a, 3b) à l'âme (17).

3. Panneau selon la revendication 1 ou 2, **caractérisé en ce que** l'élément languette (3) est détaché par rapport à l'âme au moyen d'une fente (11) sensiblement horizontale et d'une fente (10) sensiblement verticale.

4. Panneau selon l'une ou plusieurs des revendications précédentes, **caractérisé en ce que** plusieurs éléments languette (3) espacés les uns des autres sont prévus sur la longueur (L) du deuxième bord latéral (II).

5. Panneau selon l'une ou plusieurs des revendications précédentes, **caractérisé en ce que** le verrouillage horizontal s'effectue au moyen d'éléments d'accrochage (20, 21) se correspondant mutuellement.

6. Panneau selon la revendication 5, **caractérisé en ce que** l'élément d'accrochage (20) est formé sur le premier bord latéral (I) présentant le bord de verrouillage (4), par un talon (6) faisant saillie dans la direction de la face supérieure (18) et l'élément d'accrochage (21) est formé sur le deuxième bord latéral (II) présentant l'élément languette (3), par un talon (5) orienté dans la direction de la face inférieure (19).

7. Panneau selon l'une ou plusieurs des revendications précédentes, **caractérisé en ce que** le bord extérieur (3c) de l'élément languette (3) s'étend incliné d'un angle (a) par rapport à la face supérieure (18).

8. Panneau selon l'une ou plusieurs des revendications précédentes, **caractérisé en ce que** le bord de verrouillage (4) s'étendant sensiblement horizontalement est la paroi latérale d'une rainure (9) ménagée dans le premier bord latéral (I).

9. Panneau selon la revendication 6, **caractérisé en ce que** le bord de verrouillage (4) s'étendant sensiblement horizontalement est formé sur le talon (6) faisant saillie.

10. Panneau selon la revendication 9, **caractérisé en ce que** l'élément languette (3) se termine sur la face inférieure (19).

11. Panneau selon l'une ou plusieurs des revendications 6 à 10, **caractérisé en ce que** le talon (5) se dressant vers le bas présente un sommet (12) au moins partiellement plan qui se termine dans le même plan horizontal (E) qu'une surface d'appui (13) formée sur le premier bord (I) opposé, de façon que deux panneaux (1, 2) reliés ensemble s'appuient l'un sur l'autre.

12. Panneau selon l'une ou plusieurs des revendications précédentes, **caractérisé en ce qu'**une précontrainte est produite dans l'emplacement de liaison de deux panneaux (1, 2) reliés ensemble, au moyen des éléments d'accrochage (20, 21), de façon que les bords latéraux (I, II) des panneaux (1, 2) sont pressés l'un sur l'autre par leurs surfaces verticales (15, 16), dans la zone de la face supérieure (18).
